# EUROPEAN PATENT SPECIFICATION

(11) **EP 2 320 528 B1**
(45) Date of publication and mention of the grant of the patent: **17.09.2014**
(21) Application number: 09290857.3
(22) Date of filing: 10.11.2009
(51) Int. Cl.: H01S 3/11, G21K 1/06, G21K 1/00, H01J 35/00

(54) **Source of short pulses of high-energy photons and method of generating a short pulse of high-energy photons**
Quelle von kurzen Impulsen energiereicher Photonen und Verfahren zur Erzeugung eines kurzen Impulses von energiereichen Photonen
Source d'impulsions courtes de photons haute énergie et procédé de génération d'une d'impulsion courte de photons haute énergie

(43) Date of publication of application: 11.05.2011
(73) Proprietor: Ecole Polytechnique, 91128 Palaiseau (FR)
(72) Inventor: Malka, Victor, 75005 Paris (FR); Faure, Jerome, 94230 Cachan (FR); Ben-Ismail, Ahmed, 78200 Mantes la Jolie (FR); Lefebvre, Erik, 75014 Paris (FR)
(74) Representative: Szymanowski, Carsten

(56) References cited:
- US-A- 4 763 344
- US-A- 5 077 774
- US-B1- 6 333 966
- Y. GLINEC ET AL: "High Resolution gamma-Ray Radiography Produced by a Laer-Plaasma Driven Electron Source" PHYSICAL REVIEW LETTERS, vol. 94, no. 025003, 18 January 2005 (2005-01-18), pages 025003-1-025003-4, XP002578613
- B. NORDELL ET AL: "Angular distribution and yield from bremstrahlung targets" PHYS. MED.BOIL, vol. 29, no. 7, 21 October 1983 (1983-10-21), pages 797-810, XP002578614

## Description

The invention relates generally to a source of and a method for generating short pulses of high-energy photons, with a laser system producing laser pulses with pulse length shorter than 200 fs (femtoseconds) and capable to be focused to peak intensities greater than 10^18 W/cm^2 (watts per centimeter squared), a first target capable of releasing a high-energy electron pulse upon irradiation with at least one of said laser pulses, and a second target capable of releasing a short pulse of high-energy photons when being hit by said high-energy electron pulse.

By focusing an ultra-intense and ultra-short laser pulse onto a material target under certain conditions, an underdense plasma can be produced. It is then possible to generate a very strong electrical field, more than a few hundred GV/m (gigavolt per meter), capable to accelerate particles, in particular electrons, from the plasma to high energies and into a collimated and pulsed beam on a very short length scale in comparison to conventional particle accelerators, such as cyclotrons or the like. Basically, in response to the impinging powerful laser pulse, electrons are accelerated to relativistic energies and ejected from the plasma. Among the different laser-driven acceleration mechanisms in the prior art (e. g. the direct laser acceleration, the plasma beat wave acceleration, or the self-modulated laser wakefield acceleration), the non-linear behaviour of the plasma waves in the forced laser wakefield regime drives the generation of highly energetic and low-emittance electron beams.

The interest in these short pulse electron sources having diameters comparable to the laser beam waist, in particular only several tens of µm (micrometers), has grown in recent years especially in view of medical and/or radiological applications. On the one hand, accelerated electrons are frequently used in radiotherapy directly for cancer treatment by exposing the cancer tissue to the particle flux. On the other hand, highly energetic electrons can induce electromagnetic interactions. They can therefore be used to create photons of short wavelength, e. g. UV, x-rays or even in the γ-range, which can serve for imaging in nuclear medicine, medical diagnostics or radiology. The photons can also be used for non-destructive material or mechanical inspection.

In document US 6,333,966 B1 a laser accelerator femtosecond x-ray source is disclosed. Electrons are accelerated to hundreds of kiloelectronvolts (keV) to tens of megaelectronvolts (MeV) using high energy, femtosecond duration laser pulses, and are then converted to x-rays by one of several physical processes in a converter foil of a high Z material. Because the laser accelerated electrons have the pulse width of the laser driver, extremely short, e. g. less than 100 femtoseconds (fs) x-ray pulses can be produced from these electrons. It is recommended to use a foil converter thickness of one third of the electron range of the material and to back the converter with a thin low Z foil to stop the electron beam without severely attenuating the x-rays.

In document Physical Review Letters 94,025003 (2005), entitled "High-resolution γ-ray radiography produced by a laser-plasma driven electron source" a short pulse beam of electrons from a laser-plasma accelerator is used to create a short pulse beam of γ-photons by bremsstrahlung interaction on a dense material containing Tantalum. The beam of γ-photons has a compact size, in particular a lateral width, much smaller than ordinary sources of high-energy photons and its pulse duration is shorter than 1 ps (picosecond).

In document Physics in Medicine and Biology 29, 797-810, entitled "Angular distribution and yield from bremsstrahlung targets" the comparison of a theoretical prediction of angular distributions and yields of bremsstrahlung to experimental measurements is reported. It is recommended in this paper that the thickness of the target should be less that the electron range r₀ due to self-attenuation in the target.

Although the size of the short pulse electron beam is comparable to or smaller than the laser beam waist, the beam of γ-photons still has a lateral extension of several hundreds of µm (micrometers). In other words, the size of the effective source is about an order of magnitude larger than the size of the effective source of the electrons. While obviously the small, but non-vanishing divergence of the electron beam, e. g. typically 1 degree for full width half maximum, can lead to a spread if the interaction with the dense material takes place at a long distance from the effective electron source, there are additional degrading effects due to electron transport and/or deflection during the bremsstrahlung interaction in the dense material with the consequence that the size of the effective source is increased.

The technical problem to solve is to reduce the size of the effective source of the short pulses of high-energy photons.

This problem is solved by a source of short pulses of high-energy photons with the limitations according to claim 1 and/or by a method for generating short pulses of high-energy photons with the limitations according to claim 13. Further improvements and advantageous embodiments and refinements are defined by the limitations set out in the dependent claims.

According to the invention a source of short pulses of high-energy photons is provided which comprises a laser system producing laser pulses with pulse length shorter than 200 fs (femtoseconds), preferred shorter than 100 fs or even 70 fs, especially shorter than or equal to 50 or even 30 fs, and capable to be focused to peak intensities greater than 10^18 W/cm^2, preferred greater than 10^19 or even 10^20 W/cm^2 (watts per centimeter squared), a first target being capable of releasing a high-energy electron pulse upon irradiation with at least one of said laser pulses and a second target being capable of releasing a short pulse of high-energy photons when being hit by said high-energy electron pulse, whereby the thickness of the second target is smaller than or equal to, preferentially essentially equal to, a saturation length of beam hardening of said high-energy photons in the second target.

The technical term "beam hardening" denotes the physical effect that the maximum of an energy distribution of bremsstrahlung is shifted to higher energies when bremsstrahlung is travelling through a high Z material. Preferably, the laser is focused onto the first target. In particular, the electron pulse is collimated featuring a small emittance or divergence. As a measure for the energy of the emitted high-energy photons which have a certain energy distribution, a temperature value or an average value can be attributed. The lateral width is defined to be the width in lateral direction, e.g. in the plane perpendicular to the propagation direction, of the pulse between points having less than 0.2 % of the maximum electron density in the pulse. The lateral width of the second target is smaller than the full width half maximum (FWHM) in lateral direction of said high-energy electron pulse impinging on the second target. In particular said lateral width of the second target can be equal to or smaller than 1.0 mm. The focal spot or waist of the laser preferentially is of the order of the plasma wavelength of the first target.

Surprisingly, it was found that with increasing thickness of the second target the energy of the emitted high-energy photons was sharply increasing until a maximum at a certain value of the thickness was reached and then relatively slowly decreasing beyond said maximum. In other words, on the one hand, there is a saturation depth or saturation length for the maximal achievable energy. On the other hand, it was also determined that the angular divergence of the emitted high-energy photons monotonically increases with increasing thickness of the second target. In order to minimize said physical effect, the thickness should be minimal. In order to maximize the rendered energy of the photons, according to the invention beam hardening is exploited without compromising the divergence of the created high-energy photon pulse. The saturation length for beam hardening is significantly shorter than the length for maximal conversion efficiency.

Advantageously the source yields an increase in the achievable energy (decrease in the achievable wavelength) of the created photons. The created photons have a short wavelength, e. g. are UV, x-rays or γ-range photons. In particular the temperature value of the created photons can be above 15 MeV, preferably above 18 MeV.

In a preferred embodiment the laser system of the source according to the invention is a chirped pulse amplification (CPA) facility, in particular a double-CPA laser system, of a self mode-locked Ti:Sapphire laser with output energy greater than 1.6 J (0.6 J on target), output power greater than 20 TW, especially greater than 100 TW, and can have a repetition rate greater than 5 Hz, preferably especially equal to or greater than 10 Hz, the laser being capable of emitting laser pulses shorter than 40 fs, preferably shorter than or equal to 30 fs.

It is preferred that the second target is arranged directly downstream or nearly contiguous from the first target, in particular without perturbing the first target. In particular, no electron optics is present or is used between the first target and the second target. In other words, the second target is directly hit from the electrons created in the first target. The electrons reach the second target without manipulative or altering interaction.

According to the invention the first target can be a fluid jet, in particular a gas jet. In an advantageous embodiment the gas jet is a supersonic jet, preferably a supersonic Helium gas jet. The gas jet, in particular the supersonic Helium gas jet, can have about 3 mm diameter and can provide an initial plasma electron density of 7.5 x 10^18 electrons / cm^3.

The second target can consist of a solid material. The second target of the invention can be a solid foil comprising a high Z material. The solid foil can be free from a backing by another material. The high Z material can be a material or an alloy comprising a material or a combination of materials selected from the group of Tantalum (preferred), Molybdenum, Tungsten and Lead. The second target can be embodied as a band of material which can be spooled or displaced, between consecutive laser shots in order to expose an unused surface to each electron pulse. Advantageously, the second target can then be used more intensely.

The first target can be capable of releasing electrons with energy greater or equal to 1 MeV, preferably greater or equal to 100 MeV. For instance, this can be achieved by arranging an appropriate geometric shape and providing an appropriate material. It is preferred in certain embodiments that the material, the shape and the dimensions of the first target are chosen in such a way that the target is capable of releasing electrons with energy greater than or equal to 1 MeV, preferably 100 MeV.

In a further refinement of the invention the source can comprise generating means creating a magnetic field downstream from the second target. The magnetic field is passed by the short pulses of high-energy photons and acts as a filter in the sense that charged particles are deflected while photons are not. In consequence, this leads to a separation of remaining or secondary electrons from the photons.

There is also provided a method for generating high-energy radiation, in particular a high-energy particle pulse. In the method laser pulses with a pulse length shorter than 200 fs (femtoseconds), preferred shorter than 100 fs or even 70 fs, especially shorter than or equal to 50 or even 30 fs, and capable to be focused to peak intensities greater than 10^18 W/cm^2, preferred greater than 10^19 or even 10^20 W/cm^2 (watts per centimetre squared), are produced. A first target which is capable of releasing a high-energy electron pulse upon irradiation with at least one of said laser pulses is irradiated with at least one of said laser pulses. A second target is provided and hit by the high-energy electron pulse. The second target is capable of releasing a short pulse of high-energy photons when hit by the high-energy electron pulse. As the said second target a target with a thickness smaller than or equal to the saturation length of beam hardening of said high-energy photons in the second target is used.

In a preferred embodiment of the method according to the invention the at least one laser pulse is propagated to said target under vacuum condition. The interaction at the target itself takes place under vacuum condition, too. Both measures independently from each other reduce advantageously the risk of degradation of the laser pulses.

The source and the method according to this specification provide high-energy photons which can broadly and advantageously be used in medical applications, radiological applications, radiobiological applications, radiochemical applications, or applications in physical engineering, or in material engineering, e. g. non-destructive material or mechanical inspection. In particular, said use can be non-therapeutic and/or non-diagnostic.

In a particularly preferred application of said invention, said source - more precisely, said high-energy photons of said source - is used for a non-destructive and/or non-invasive inspection of a workpiece or a workpart. The workpiece can be a part, a component or the entire body of a device, an apparatus, an equipment, a machine, an installation, a building construction, an automobile, a plane, a naval vessel, or the like. An image of at least a part of said workpiece is obtained: The workpiece is provided and/or arranged at a place to be exposed by said high-energy photons. Then, at least a part of said workpiece is exposed by said high-energy photons released from said source. After that, at least one signal being a measure for the scattering and/or damping of said high-energy photons is detected. Depending on said signal, an image of at least said part of said workpiece is created, in particular electronically. Advantageously, said inspection is not limited to the surface of the workpiece, but can comprise or can be extended to its interior up to a depth said high-energy photons can penetrate. The workpiece can be two-dimensionally or three-dimensionally scanned in order to obtain a two-dimensional or a three-dimensional image, accordingly. The obtained image can be further processed, preferably in electronic form and/or using computer software. In a further refinement, the image can be obtained in tomography.

Further improvements, refinements and advantageous embodiments, features and characteristics are described below and are explained in more detail by referring to the attached drawings. It should be understood that the detailed description and specific examples given, while indicating the preferred embodiment, are intended for purpose of illustration and are not intended to unduly limit the scope of the present invention.

The various features, advantages and possible uses of the present invention will become more apparent in the following description and the attributed drawings, wherein:
Figure 1 is showing a schematic representation of the topology of an embodiment of the source of short pulses of high-energy photons according to the invention, and
Figure 2 is showing a scheme of the preferred embodiment of the chirped pulse amplification (CPA) laser facility used in the device according to the invention.

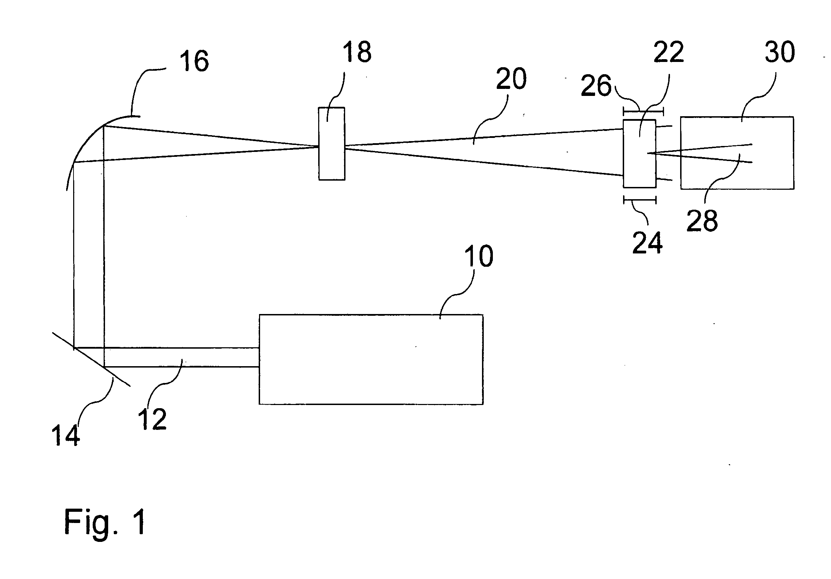

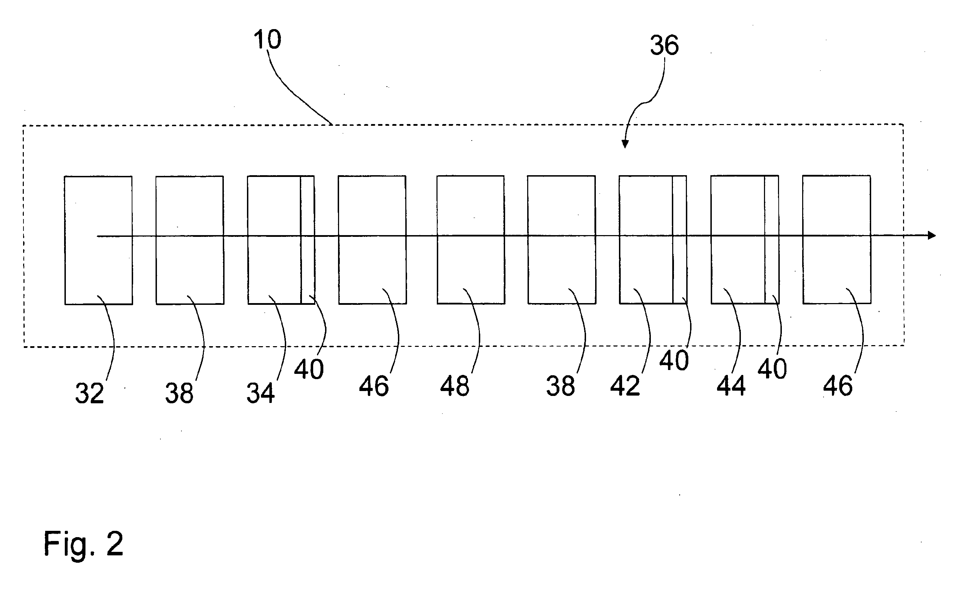

In Figure 1 a schematic representation of the topology of a preferred embodiment of the source of short pulses of high-energy photons is shown. A laser system 10 is capable of emitting a train of sub-picosecond ultra-intense laser pulses 12 shorter than 100 fs which can be focused to peak intensities greater than 10^18 W/cm^2. The laser output consists of laser pulses 12 which have an advantageously steep rising edge (see also below in conjunction with Figure 2). Delivery optics 14 which may comprise light guiding elements, divergence or emittance converting elements or the like, represented here in Figure 1 by a simple mirror, guide the laser pulses 12 to a reaction or interaction volume. The laser pulses are focused with the aid of a f/18 off-axis parabolic mirror 16 onto a first target 18, in preferred embodiment a supersonic Helium gas jet with 3 mm diameter. The first target 18 is preferably positioned in the focus or close to the focus, for instance in the Rayleigh range of the focus, of the laser pulses 12. The interaction of the laser pulses 12 with the first target 18 yields a highly collimated (very low emittance) electron pulse 20 emitted essentially perpendicular to the rear surface of the first target 18.

The electron pulse 20 impinges onto a second target 22 which comprises for instance Tantalum. The thickness 24 of the second target 22 is smaller than saturation length 26 of beam hardening of the electron pulse. Inside the second target 22 a short pulse of high-energetic photons 28 (γ-photons) is generated.

The embodiment shown in Figure 1 also comprises a magnetic field 30 whose generating means are not explicitly shown, but might be permanent magnets or electromagnets. The magnetic field 30 is capable to influence the propagation direction of electrons leaving the second target 22 basically in the same direction as the produced photon pulse 22 and to separate the electrons from the photons in order to receive a purified photon pulse. The thus obtained short pulse of high-energy photons might be used in a medical or radiological application or for material inspection purposes.

The entire source can be arranged inside a vacuum chamber. Alternatively, the laser pulses 12 can be conveyed from a laser table to the reaction volume in a vacuum chamber housing the first target 18 and the second target 22. The laser pulses 12 can be guided under vacuum conditions to the volume.

In Figure 2 a scheme of the preferred embodiment of the laser system used in the source according to the invention is shown. The laser system is a so-called double-CPA laser system. It operates in chirped-pulse amplification mode at 820 nm (nanometer) central wavelength. A mode-coupled oscillator 32 comprises a Titanium:Sapphire crystal which is pumped by an Argon-ion laser. The oscillator 32 output consists of femtosecond pulses, in particular essentially 15 fs long, with an energy of 2 nJ with a repetition rate of approximately 88 MHz. The oscillator 32 pulses are stretched by a pair of optical gratings in stretcher 38 (pulse chirping) and an acousto-optical modulator is used afterwards to select individual pulses at a frequency of 10 Hz out of the high-frequency pulse train leaving the oscillator 32 and the stretcher 38. After that pulses essentially 400 ps long and with an energy of about 500 pJ enter an 8-pass pre-amplifier 34. The pre-amplifier 34 is pumped by a frequency-doubled pulsed Nd:YAG laser with 200mJ energy per pulse at a frequency of 10 Hz. Stretcher 38 and pre-amplifier 34 are optically isolated using an arrangement of a Pockels cell between polarizers. The output of pre-amplifier 34 passes through a spatial filter 40 (afocal x4) and conveys an energy of 2mJ per pulse. Now the 10 Hz pulse train is partially or totally recompressed (compressor 46, pulse dechirping) and passes a device 48 for shaping the temporal intensity profile (preferred topology after the pre-amplification stage). It is advantageous to increase the laser contrast, meaning the difference in intensity between the maximum and the leading edge (of the wing) of the pulse, by shaping the temporal intensity profile right after the pre-amplification stage. The device 48 is followed by a second stretcher 38 (pulse chirping) and by a main amplifier 36. The main amplifier 36 comprises a 5-pass first power amplifier 42 pumped by a frequency-doubled pulsed Nd:YAG laser with 1 J energy per pulse at 10 Hz. The pulses amplified to 200 mJ energy pass through a spatial filter 40, preferably a vacuum spatial filter (afocal x4) and enter a 4-pass second power amplifier 44 of the main amplifier 36. The crystal of the second power amplifier 44 is contained in a cryogenic chamber at 120 K temperature. Several frequency-doubled pulsed Nd:YAG lasers pump this amplification stage: Three lasers at 1.7 J, three lasers at 1.5 J, an one laser at 1.7 J are used. This arrangement results in an output of pulses being 400 ps long and having an energy of 3.5 J. After the second amplification a spatial filter 40, preferably a vacuum spatial filter (afocal x1) is traversed. The pulses are eventually compressed in a vacuum compressor 46 (pulse dechirping) using a pair of optical gratings reaching pulses being 30 fs to 25 fs long (full width half maximum) and having an energy of 2.5 J. The waist of the focal spot is 18 µm, resulting in vacuum focused intensities of the order of 4 x 10^18 W/cm^2, which corresponds to a normalised laser vector potential of 1.4, reaching on-target energies of 1.3 J.

### REFERENCE NUMERAL LIST

- 10: laser system
- 12: sub-picosecond laser pulse
- 14: delivery optics
- 16: parabolic mirror
- 18: first target
- 20: electron pulse
- 22: second target
- 24: thickness of second target
- 26: saturation length of beam hardening
- 28: photon pulse
- 30: magnetic field
- 32: oscillator
- 34: pre-amplifier
- 36: main amplifier
- 38: stretcher
- 40: spatial filter
- 42: first power amplifier
- 44: second power amplifier
- 46: compressor
- 48: device for shaping the temporal intensity profile

## Claims

1. A source of short pulses of high-energy photons (28), comprising:
- a laser system (10) producing laser pulses (12) with a pulse length shorter than 200 fs and capable to be focused to peak intensities greater than 10^18 W/cm^2;
- a first target (18) capable of releasing a high-energy electron pulse (20) upon irradiation with at least one of said laser pulses (12);
- a second target (22) capable of releasing a short pulse of high-energy photons (28) when being hit by said high-energy electron pulse (20); **characterised by**
- the thickness (24) of the second target (22) being smaller than or equal to a saturation length (26) of beam hardening of said high-energy photons (28) in the second target (22), and
- a lateral width of the second target (22) being smaller than the full width half maximum (FWHM) of the lateral width of said high-energy electron pulse (20) impinging on the second target (22).

2. A source of short pulses of high-energy photons (28) according to claim 1,
**characterised in that**
the thickness (24) of the second target (22) being essentially equal to the saturation length (26) of beam hardening of said high-energy photons (28) in the second target (22).

3. A source of short pulses of high-energy photons (28) according to claim 1,
**characterised in that**
the laser system (10) is a chirped pulse amplification facility of a self mode-locked Ti:Sapphire laser with output energy greater than 0.6 J, output power greater than 20 TW capable of emitting laser pulses shorter than 40 fs.

4. A source of short pulses of high-energy photons (28) according to claim 1,
**characterised in that**
the second target (22) is arranged directly downstream from the first target (18).

5. A source of short pulses of high-energy photons (28) according to claim 1,
**characterised in that**
the first target (18) is a fluid jet or a gas jet or a supersonic gas jet or a supersonic Helium gas jet.

6. A source of short pulses of high-energy photons (28) according to claim 1,
**characterised in that**
the focal spot or waist of the laser is of the order of the plasma wavelength of the first target (18).

7. A source of short pulses of high-energy photons (28) according to claim 1,
**characterised in that**
the second target (22) is a solid foil comprising a high Z material and/or comprises a band of material.

8. A source of short pulses of high-energy photons (28) according to claim 1,
**characterised in that**
the second target (22) is a material or an alloy comprising a material or a combination of materials selected from the group of Tantalum, Molybdenum, Tungsten and Lead.

9. A source of short pulses of high-energy photons (28) according to claim 1,
**characterised in that**
the first target (18) is capable of releasing electrons with energy greater or equal to 1 MeV.

10. A source of short pulses of high-energy photons (28) according to claim 1,
**characterised by**
generating means creating a magnetic field (30) downstream from the second target (22) and being passed by the short pulses of high-energy photons (28).

11. A source of short pulses of high-energy photons (28) according to claim 1,
**characterised by**
a lateral width of the second target (22) being equal to or smaller than 1.0 mm.

12. A source of short pulses of high-energy photons (28) according to claim 1,
**characterised by**
said thickness (24) of the second target (22) being smaller than or equal to 1.0 mm.

13. A method for generating a short pulse of high-energy photons (28), comprising:
- Producing laser pulses (12) with a pulse length shorter than 200 fs and capable to be focused to peak intensities greater than 10^18 W/cm^2;
- Irradiating a first target (18) capable of releasing a high-energy electron pulse (20) upon irradiation with at least one of said laser pulses (12);
- Impinging said high-energy electron pulse (20) on a second target (20) capable of releasing a short pulse of high-energy photons (28); **characterised by**
- Using as said second target (20) a target with a thickness (24) being smaller than or equal to the saturation length (26) of beam hardening of said high-energy photons (28) in the second target (22) and with a lateral width of the second target (22) being smaller than the full width half maximum (FWHM) of the lateral width of said high-energy electron pulse (20) impinging on the second target (22).

14. Use of a source according to claim 1 for non-destructive inspection of a workpiece by obtaining an image of at least a part of said workpiece, comprising the steps:
- Providing said workpiece at a place to be exposed by high-energy photons released from said source;
- Exposing at least a part of said workpiece with high-energy photons released from said source;
- Detecting at least one signal being a measure for the scattering and/or damping of said high-energy photons; and
- Creating an image of at least said part of said workpiece.

## Patentansprüche

1. Eine Quelle von kurzen Pulsen von hochenergetischen Photonen (28), umfassend:
- ein Lasersystem (10), welches Laserpulse (12) mit Pulslängen kürzer als 200 fs und geeignet, zu Spitzenintensitäten größer als 10^18 W/cm^2 fokussiert zu werden, erzeugt;
- ein erstes Ziel (18), geeignet zur Freisetzung eines hochenergetischen Elektronenpulses (20) bei Bestrahlung mit wenigstens einem der besagten Laserpulse (12);
- ein zweites Ziel (22), geeignet zur Freisetzung eines kurzen Pulses von hochenergetischen Photonen (28) bei Beschuss mit besagtem hochenergetischen Elektronenpuls (20);
**gekennzeichnet durch**
- die Dicke (24) des zweiten Ziels (22) ist kleiner als oder gleich der Sättigungslänge (26) der Strahlhärtung der besagten hochenergetischen Photonen (28) im zweiten Ziel (22), und
- eine laterale Breite des zweiten Ziels (22) ist kleiner als oder gleich der Halbwertsbreite des besagten hochenergetischen Elektronenpulses (20), der auf das zweite Ziel (22) auftrifft.

2. Eine Quelle von kurzen Pulsen von hochenergetischen Photonen (28) gemäß Anspruch 1,
**dadurch gekennzeichnet,**
**dass** die Dicke (24) des zweiten Ziels (22) im Wesentlichen gleich der Sättigungslänge (26) der Strahlhärtung der besagten hochenergetischen Photonen (28) im zweiten Ziel (22) ist.

3. Eine Quelle von kurzen Pulsen von hochenergetischen Photonen (28) gemäß Anspruch 1,
**dadurch gekennzeichnet,**
**dass** das Lasersystem (10) eine Verstärkungseinrichtung für gechirpte Pulse eines selbst modengekoppelten Ti:Saphir Lasers mit Ausgangsenergie von mehr als 0,6 J, Ausgangsleistung größer als 20 TW, geeignet Laserpulse kürzer als 40 fs zu emittieren, ist.

4. Eine Quelle von kurzen Pulsen von hochenergetischen Photonen (28) gemäß Anspruch 1,
**dadurch gekennzeichnet,**
**dass** das zweite Ziel (22) direkt stromabwärts des ersten Ziels (18) angeordnet ist.

5. Eine Quelle von kurzen Pulsen von hochenergetischen Photonen (28) gemäß Anspruch 1,
**dadurch gekennzeichnet,**
**dass** das erste Ziel (18) ein Fluidstrahl, ein Gasstrahl, ein Überschallgasstrahl oder ein Überschallheliumgasstrahl ist.

6. Eine Quelle von kurzen Pulsen von hochenergetischen Photonen (28) gemäß Anspruch 1,
**dadurch gekennzeichnet,**
**dass** der Fokusfleck oder die Taille des Lasers in der Größenordnung der Plasmawellenlänge des ersten Zieles (18) liegt.

7. Eine Quelle von kurzen Pulsen von hochenergetischen Photonen (28) gemäß Anspruch 1,
**dadurch gekennzeichnet,**
**dass** das zweite Ziel (22) eine feste Folie, die ein Material mit hohem Z aufweist, und/oder ein Materialband aufweist.

8. Eine Quelle von kurzen Pulsen von hochenergetischen Photonen (28) gemäß Anspruch 1,
**dadurch gekennzeichnet,**
**dass** das zweite Ziel (22) ein Material oder eine Legierung, die ein Material oder eine Kombination von Materialen aufweist, ist, wobei das Material aus das Gruppe von Tantal, Molybdän, Wolfram oder Blei ausgewählt ist.

9. Eine Quelle von kurzen Pulsen von hochenergetischen Photonen (28) gemäß Anspruch 1,
**dadurch gekennzeichnet,**
**dass** das erste Ziel (18) geeignet ist, Elektronen mit Energie größer oder gleich 1 MeV freizusetzen.

10. Eine Quelle von kurzen Pulsen von hochenergetischen Photonen (28) gemäß Anspruch 1,
**gekennzeichnet durch**
Erzeugungsmittel zur Schaffung eines Magnetfelds (30), das von den kurzen Pulsen von hochenergetischen Photonen (28) passiert wird, stromab des zweiten Ziels (22).

11. Eine Quelle von kurzen Pulsen von hochenergetischen Photonen (28) gemäß Anspruch 1,
**gekennzeichnet durch**
eine laterale Breite des zweiten Ziel (22) von gleich oder kleiner als 1,0 mm.

12. Eine Quelle von kurzen Pulsen von hochenergetischen Photonen (28) gemäß Anspruch 1,
**dadurch gekennzeichnet,**
**dass** die besagte Dicke (24) des zweiten Ziels (22) kleiner als oder gleich 1,0 mm ist.

13. Ein Verfahren zum Erzeugen eines kurzen Pulses von hochenergetischen Photonen (28), umfassend:
- Erzeugen von Laserpulsen (12) mit einer Pulslänge kürzer als 200 fs und geeignet, zu Spitzenintensitäten größer als 10^18 W/cm^2 fokussiert zu werden;
- Bestrahlen eines ersten Zieles (18), geeignet, bei Bestrahlung mit wenigstens einem der besagten Laserpulse (12) einen hochenergetischen Elektronenpuls (28) freizusetzen;
- Auftreffen besagten hochenergetischen Elektronenpulses (28) auf ein zweites Ziel (20), geeignet, einen kurzen Puls von hochenergetischen Photonen (28) freizusetzen;
**gekennzeichnet durch**
- Verwenden als zweites Ziel (20) ein Ziel mit einer Dicke (24), die kleiner oder gleich der Sättigungslänge (26) der Strahlhärtung der besagten hochenergetischen Photonen (28) im zweiten Ziel (22) ist, und mit einer lateralen Breite des zweiten Ziels (22), die kleiner als die Halbwertsbreite der lateralen Breite vom besagten auf das zweite Ziel (22) auftreffenden hochenergetischen Elektronenpuls (20) ist.

14. Verwendung einer Quelle gemäß Anspruch 1 zur zerstörungsfreien Untersuchung eines Werkstücks, indem ein Bild wenigstens eines Teils des Werkstücks erhalten wird, umfassend die Schritte:
- Bereitstellen besagten Werkstücks an einer Stelle, die von der Quelle freigesetzten hochenergetischen Photonen belichtet wird;
- Belichten wenigstens eines Teils des besagten Werkstücks mit von der Quelle freigesetzten hochenergetischen Photonen;
- Feststellen wenigstens eines Signals, das ein Maß für die Streuung und/oder Schwächung der besagten hochenergetischen Photonen ist; und
- Erzeugen eines Bildes von wenigstens besagtem Teil des Werkstücks.

## Revendications

1. Une source d'impulsions courtes de photons de haute énergie (28), comprenant :
- un système laser (12) produisant des impulsions laser (12) avec une longueur d'impulsion inférieure à 200 fs et capables d'être focalisées à des intensités maximales supérieures à 10^18 W/cm^2;
- une première cible (18) capable de libérer une impulsion d'électrons de haute énergie (20) lors de l'irradiation avec au moins une desdites impulsions laser (12);
- une seconde cible (22) capable de libérer une impulsion de photons de haute énergie (28) lorsque touchée par ladite impulsion d'électrons de haute énergie (20);
**caractérisée par**
- l'épaisseur (24) de la seconde cible (22) étant inférieure ou égale à une longueur de saturation (26) du durcissement du faisceau desdits photons de haute énergie (28) dans la seconde cible (22), et
- une largeur latérale de la seconde cible (22) étant inférieure à la largeur à mi-hauteur de la largeur latérale de ladite impulsion d'électrons de haute énergie (20) frappant sur la seconde cible (22).

2. Une source d'impulsions courtes de photons de haute énergie (28) selon la revendication 1,
**caractérisée en ce que**
l'épaisseur (24) de la seconde cible (22) est essentiellement égale à la longueur de saturation (26) du durcissement du faisceau desdits photons de haute énergie (28) dans la seconde cible (22).

3. Une source d'impulsions courtes de photons de haute énergie (28) selon la revendication 1,
**caractérisée en ce que**
le système laser (10) est une installation d'amplification à dérive de fréquence d'un laser Ti:Saphir avec autocouplage de modes, avec une énergie de sortie supérieure à 0.6 J, une puissance de sortie supérieure à 20 TW, capable d'émettre des impulsions laser plus courtes que 40 fs.

4. Une source d'impulsions courtes de photons de haute énergie (28) selon la revendication 1,
**caractérisée en ce que**
la seconde cible (22) est arrangée directement en aval de la première cible (18).

5. Une source d'impulsions courtes de photons de haute énergie (28) selon la revendication 1,
**caractérisée en ce que**
la première cible (18) est un jet de fluide ou un jet de gaz ou un jet de gaz supersonique ou jet de gaz supersonique de helium.

6. Une source d'impulsions courtes de photons de haute énergie (28) selon la revendication 1,
**caractérisée en ce que**
le foyer ou la taille du laser est de l'ordre de la longueur d'onde de plasma de la première cible (18).

7. Une source d'impulsions courtes de photons de haute énergie (28) selon la revendication 1,
**caractérisée en ce que**
la seconde cible (22) est une feuille solide comprenant un matériel à haut Z et/ou comprend une bande de matériau.

8. Une source d'impulsions courtes de photons de haute énergie (28) selon la revendication 1,
**caractérisée en ce que**
la seconde cible (22) est un matériau ou un alliage comprenant un matériau ou une combinaison de matériaux sélectionnés du groupe de tantale, molybdène, tungstène et plomb.

9. Une source d'impulsions courtes de photons de haute énergie (28) selon la revendication 1,
**caractérisée en ce que**
la première cible (18) est capable de libérer des électrons avec une énergie supérieure ou égale à 1 MeV.

10. Une source d'impulsions courtes de photons de haute énergie (28) selon la revendication 1,
**caractérisée par**
des moyens de génération créant un champ magnétique (30) en aval de la seconde cible (22) et traversé par les impulsions courtes de photons de haute énergie (28).

11. Une source d'impulsions courtes de photons de haute énergie (28) selon la revendication 1,
**caractérisée par**
une largeur latérale de la seconde cible (22) étant égale ou inférieure à 1.0 mm.

12. Une source d'impulsions courtes de photons de haute énergie (28) selon la revendication 1,
**caractérisée par**
ladite épaisseur (24) de la seconde cible (22) étant inférieure ou égale à 1.0 mm.

13. Une méthode pour produire une impulsion courte de photons de haute énergie (28), comprenant :
- Produire des impulsions laser (12) avec une longueur d'impulsion inférieure à 200 fs et capables d'être focalisées à des intensités maximales supérieures à 10^18 W/cm^2;
- Irradier une première cible (18) capable de libérer une impulsion d'électrons de haute énergie (20) lors de l'irradiation avec au moins une desdites impulsions laser (12);
- Ladite impulsion d'électrons de haute énergie (20) incidente sur une seconde cible (20) capable de libérer une impulsion de photons de haute énergie (28) lorsque touchée par ladite impulsion d'électrons de haute énergie (20); **caractérisée par**
- Utiliser comme seconde cible (20) une cible avec une épaisseur (24) étant inférieure ou égale à une longueur de saturation (26) du durcissement du faisceau desdits photons de haute énergie (28) dans la seconde cible (22) et avec une largeur latérale de la seconde cible (22) étant inférieure à la largeur à mi-hauteur de la largeur latérale de ladite impulsion d'électrons de haute énergie (20) frappant sur la seconde cible (22).

14. Utilisation d'une source selon la revendication 1 pour l'inspection non-destructive d'une pièce en obtenant une image d'au moins une partie de ladite pièce, comprenant les étapes :
- Disposer ladite pièce à une place pour être exposée aux photons de haute énergie libérés par ladite source;
- Exposer au moins une partie de ladite pièce aux photons de haute énergie libérés par ladite source;
- Détecter au moins un signal étant une mesure pour la diffusion et/ou l'atténuation desdits photons de haute énergie; et
- Créer une image d'au moins une partie de ladite pièce.
